# EUROPÄISCHE PATENTANMELDUNG

(11) **EP 0 732 487 A2**
(43) Veröffentlichungstag der Anmeldung: **18.09.1996**
(21) Anmeldenummer: 96101164.0
(22) Anmeldetag: 29.01.1996
(51) Int. Cl.: F02B 29/04

(54) **Brennkraftmaschine mit einem Abgasturbolader**

(30) Priorität: 07.03.1995 DE 19507961
(71) Anmelder: MERCEDES-BENZ AG, 70327 Stuttgart (DE)
(72) Erfinder: Eibl, Markus, Dipl.-Ing., D-70193 Stuttgart (DE)

(57) **Zusammenfassung**

Eine Brennkraftmaschine (11) mit einem Abgasturbolader (12), dessen Verdichter (15) in einer Ladeluftleitung (14) der Brennkraftmaschine (11) angeordnet ist, und mit einem stromab des Verdichters (15) angeordneten Ladeluftkühlers (16) weist eine in dem Ladeluftkühler (16) angeordnete Umschalteinrichtung (18) auf, die während der Warmlaufphase der Brennkraftmaschine bis zum Erreichen einer vorgesehenen Brennkraftmaschinengrenztemperatur nahezu den gesamten Ladestrom von der stromauf des Ladeluftkühlers (16) angeordneten Ladeluftleitung (14) unmittelbar einer stromab des Ladeluftkühlers (16) angeordneten Ladeluftleitung (14) zuführt und nach einer Warmlaufphase den Ladeluftstrom durch den Ladeluftkühler (16) hindurchführt.

## Beschreibung

Die Erfindung betrifft eine Brennkraftmaschine mit einem Abgasturbolader gemäß dem Oberbegriff des Hauptanspruchs.

Aus der DE-OS 39 29 123 ist eine Brennkraftmaschine der im Oberbegriff des Hauptanspruchs beschriebenen Gattung bekannt. Bei dieser Brennkraftmaschine ist in der Abgasleitung eine Bypassleitung zur Umgehung des Ladeluftkühlers vorgesehen. Der Ladeluftstrom wird in Abhängigkeit der Brennkraftmaschinentemperatur unter Einsatz einer temperaturabhängig betätigbaren Umschalteinrichtung in der Warmlaufphase der Brennkraftmaschine am Ladeluftkühler vorbeigeführt. Nach Erreichen einer vorgegebenen Brennkraftmaschinengrenztemperatur, die mit einem an der Brennkraftmaschine angeordneten Temperaturfühler erfaßbar ist, erfolgt eine Betätigung der Umschalteinrichtung, so daß der Ladeluftstrom durch den Ladeluftkühler geleitet wird.

Die den Ladeluftkühler umgehende Bypassleitung ist stromauf und stromab des Ladeluftkühlers mit einer in der Ladeluftleitung angeordneten Umschalteinrichtung verbunden. Diese Anordnung erfordert eine aufwendige Ansteuerung von zwei Umschalteinrichtungen und weist eine kostenintensive Ausgestaltung einer Bypassleitung zur Umgehung des Ladeluftkühlers auf.

Eine Verbesserung dieser Nachteile ist durch die aus der DE-OS 36 27 686 bekannten Anordnung einer Brennkraftmaschine mit einem Abgasturbolader bekannt. Diese Anordnung weist eine von der Ladeluftleitung abzweigende und den Ladeluftkühler umgehende Bypassleitung auf, die über eine Umschalteinrichtung steuerbar ist, wobei stromab des Ladeluftkühlers die Bypassleitung in die Ladeluftleitung mündet. Diese Anordnung ist durch die Ansteuerung von nur einer Umschalteinrichtung vereinfacht, jedoch bleibt die aufwendige Anordnung von einer zusätzlichen Bypassleitung bestehen. Zudem sind bei Bypassleitungen sowohl in dem Bereich der Abzweigung als auch in dem Bereich der Einmündung ungünstige Strömungsbedingungen gegeben.

Der Erfindung liegt daher die Aufgabe zugrunde, eine Brennkraftmaschine der im Oberbegriff des Hauptanspruchs beschriebenen Art zu schaffen, die einen einfachen Aufbau und eine kompakte Bauweise ermöglicht, wobei während der Warmlaufphase über den gesamten Last- und Drehzahlbereich eine relativ hohe Ladelufttemperatur gewährleistet ist, aber dennoch bei betriebswarmer Brennkraftmaschine keinerlei Probleme aufgrund zu hoher Ladelufttemperaturen auftreten.

Die Aufgabe wird erfindungsgemäß durch die Merkmale des kennzeichnenden Teil des Hauptanspruchs gelöst.

Durch die erfindungsgemäße Anordnung der Umschalteinrichtung in dem Ladeluftkühler ist es möglich, daß der Ladeluftstrom unmittelbar über eine stromauf des Ladeluftkühlers angeordnete Ladeluftleitung unmittelbar dem Ladeluftkühler zuführbar ist und über eine stromab des Ladeluftkühlers angeordnete Ladeluftleitung der Ladeluftstrom unmittelbar der aufgeladenen Brennkraftmaschine zuführbar ist. Die Umschalteinrichtung in dem Ladeluftkühler ermöglicht in Abhängigkeit der vorgegebenen Betriebstemperatur, daß in der Warmlaufphase der Brennkraftmaschine der Ladeluftstrom unmittelbar aus der stromauf des Ladeluftkühlers liegenden Ladeluftleitung in die stromab des Ladeluftkühlers liegende Ladeluftleitung übergeführt wird, ohne durch den Ladeluftkühler zu strömen und gekühlt zu werden. Daraus resultiert eine verbesserte Verbrennung. Dadurch kann die Gemischanreicherung verringert werden, womit eine Reduktion des Schadstoffausstoßes, insbesondere an Kohlenwasserstoffen und Kohlenmonoxid erzielt wird. Zudem führt die unmittelbare Zuleitung der Ladeluft von dem Verdichter zu der Brennkraftmaschine zu einem schnelleren Anstieg der Ladelufttemperatur, was sich ebenfalls günstig auf einen ggfs. in der Abgasleitung angeordneten Katalysator auswirkt. Die Anordnung der Umschalteinrichtung in dem Ladeluftkühler ermöglicht eine Einsparung der Bypassleitung, wodurch eine platzsparende und kompakte Bauweise geschaffen werden kann. Zudem kann dadurch aufgrund der Verringerung von Bauteilen und verringerten Montagezeiten eine kostengünstige Anordnung gegeben sein. Die kompakte Bauweise kann ferner zu einer Verbesserung der Motorraumoptik führen.

Nach einer vorteilhaften Ausgestaltung der Erfindung ist vorgesehen, daß nach Überschreiten der vorgesehenen Brennkraftmaschinengrenztemperatur die Umschalteinrichtung verschließbar ist und der gesamte Ladeluftstrom durch den Ladeluftkühler geführt wird. Dadurch können Nachteile, wie sie durch zu hohe Ladelufttemperaturen hervorgerufen werden, nicht auftreten, wie dies z.B. das Klopfen, Beschädigungen des Katalysators infolge zu hoher Abgastemperaturen, sein kann. Die Umschalteinrichtung wirkt zumindest auf dem unmittelbaren Strömungsweg von einem Eintrittsbereich der stromauf liegenden Ladeluftleitung des Ladeluftkühlers und einem Austrittsbereich der stromab des Ladeluftkühlers liegenden Ladeluftleitung. Durch die Umschalteinrichtung kann der zugeführte Ladeluftstrom zwangsweise den Ladeluftkühler vollständig durchströmen und gekühlt werden.

Nach einer weiteren vorteilhaften Ausgestaltung der Erfindung ist vorgesehen, daß zwischen dem Abgasturbolader und dem Ladeluftkühler eine durchgehende Ladeluftleitung vorgesehen ist. Dadurch ist eine einfache und strömungsgünstige Anordnung der Ladeluftleitung ermöglicht, bei der mit einem nahezu ungestörten Strömungsprofil und ohne Strömungsverluste der Ladeluftstrom dem Ladeluftkühler zugeführt werden kann.

Nach einer weiteren vorteilhaften Ausgestaltung der Erfindung ist vorgesehen, daß auf einer Seite des Ladeluftkühlers jeweils ein einem Eintritts- und Austrittsbereich zugeordneter Stutzen vorgesehen ist, an den jeweils eine Ladeluftleitung anschließbar ist. Dadurch ist ermöglicht, daß der Ladeluftstrom unmittelbar nach dem Einströmen in den Eintrittsbereich in den Austrittsbereich gelangen kann, um in die stromab des Ladeluftkühlers liegende Ladeluftleitung zu strömen. Aufgrund eines Druckverlustes im Kühlsystem des Ladeluftkühlers ist ein erhöhter Strömungswiderstand gegeben, so daß der Ladeluftstrom, ohne das Kühlsystem des Ladeluftkühlers im wesentlichen abzuriegeln, unmittelbar aus dem Eintrittsbereich in den Austrittsbereich strömt und der Brennkraftmaschine zuführbar ist.

Nach einer weiteren vorteilhaften Ausgestaltung der Erfindung ist vorgesehen, daß der Eintritts- und Austrittsbereich Stutzen aufweist, auf denen Ladeluftleitungen anschließbar sind. Diese Stutzen sind im wesentlichen parallel zueinander und vorzugsweise mit geringem Abstand zu der Umschalteinrichtung angeordnet. Dadurch kann eine kompakte Bauweise des Ladeluftkühlers mit kurzen Strömungswegen erzielt werden. Zudem kann vorteilhafterweise vorgesehen sein, daß in dem Eintritts- bzw. Austrittsbereich Führungsbleche vorgesehen sind, die ein Umlenken des Ladeluftstromes begünstigen, um Strömungsverluste zu minimieren.

Nach einer weiteren vorteilhaften Ausgestaltung der Erfindung ist vorgesehen, daß die Umschalteinrichtung als eine betätigbare Klappe ausgebildet ist, mit der der Strömungsquerschnitt des Ladeluftstromes vorzugsweise stufenlos veränderbar ist. Dadurch kann in Abhängigkeit der Betriebszustände die Umschalteinrichtung einen unterschiedlichen Strömungsquerschnitt freigeben, so daß beispielsweise auch eine teilweise Kühlung und ein teilweise unmittelbares Umleiten des Ladeluftstromes von dem Eintrittsbereich in den Austrittsbereich gegeben sein kann.

Vorteilhafterweise ist vorgesehen, daß die Umlenkeinrichtung durch eine mit dem Temperaturfühler wirkverbundene Stelleinrichtung steuerbar ist. Dadurch kann in Abhängigkeit der Betriebstemperatur der Brennkraftmaschine die Stellung der Klappe einstellbar sein. Dabei können über ein Motormanagement weitere Stellgrößen zusätzlich zu der Betriebstemperatur der Brennkraftmaschine mit einbezogen werden und einen Einfluß auf die Stellung der Umschalteinrichtung haben. Die Stelleinrichtung kann in Abhängigkeit der Ausbildung der Umschalteinrichtung mechanisch, elektronisch, elektropneumatisch, pneumatisch, magnetisch oder hydraulisch ausgebildet sein. Somit kann die Umschalteinrichtung beispielsweise als Drosselklappe, Magnetventil oder pneumatisch gesteuertes Ventil ausgebildet sein, wobei die Umschalteinrichtung vorteilhafterweise eine hohe Temperaturbeständigkeit aufweist und hohen Drücken standhält, die insbesondere in geschlossenem Zustand auf die Umschalteinrichtung wirken können. Ferner kann ebenso ein Zweiwegeventil vorgesehen sein.

Ein Ausführungsbeispiel einer erfindungsgemäßen Brennkraftmaschine ist in der Zeichnung dargestellt. Es zeigen:
- Fig. 1: das Ausführungsbeispiel in einer Prinzipdarstellung und
- Fig. 2: eine perspektivische Ansicht eines Ladeluftkühlers.

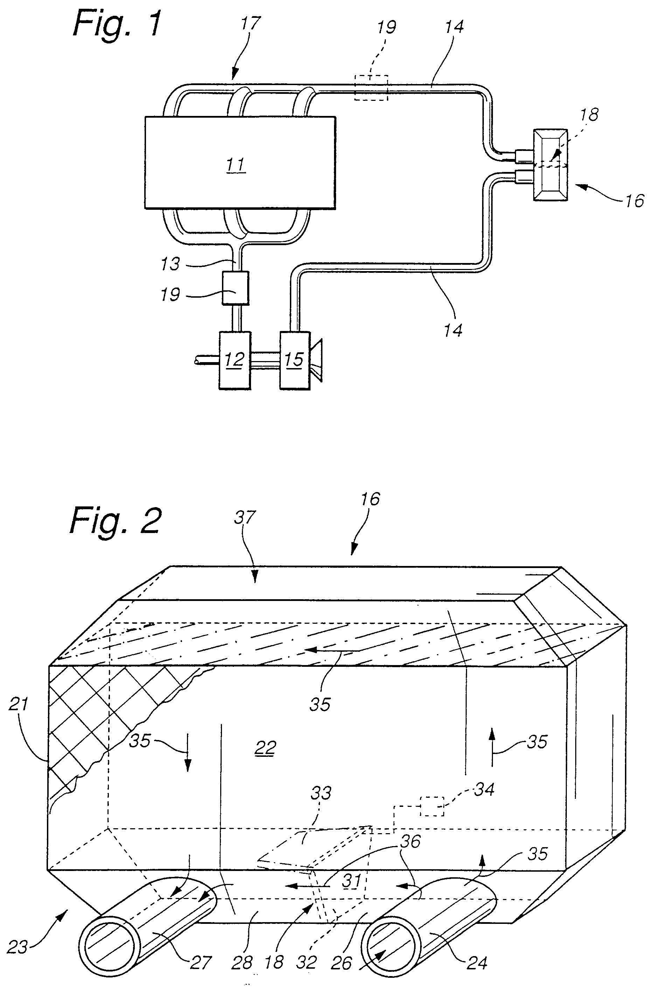

In Fig. 1 ist eine Prinzipdarstellung der erfindungsgemäß ausgebildeten Brennkraftmaschine 11 dargestellt. Diese durch einen Abgasturbolader 12 aufgeladene gasgemischverdichtete Brennkraftmaschine 11 weist eine Abgasleitung 13 und eine Ladeluftleitung 14 auf. Stromab eines in der Ladeluftleitung 14 angeordneten Verdichters 15 des Abgasturboladers 12 ist ein Ladeluftkühler 16 angeordnet. Stromab des Ladeluftkühlers 16 mündet die Ladeluftleitung 14 unmittelbar in einen Luftsammler 17 der Brennkraftmaschine 11. Die stromauf und stromab des Ladeluftkühlers 16 angeordneten Ladeluftleitungen 14 sind unmittelbar und durchgehend an den stromauf liegenden Verdichter 15 bzw. den stromab liegenden Luftsammler 17 angeschlossen.

In dem Ladeluftkühler 16 ist eine Umschalteinrichtung 18 vorgesehen. Während der Warmlaufphase der Brennkraftmaschine ist die Umschalteinrichtung 18 in einem geöffneten Zustand angeordnet, so daß der dem Ladeluftkühler 16 zugeführte Ladeluftstrom unmittelbar in die stromab des Ladeluftkühlers 16 angeordnete Ladeluftleitung 14 umgeleitet und eingeführt wird. Dadurch kann eine schnelle Erhöhung der Betriebstemperatur der Brennkraftmaschine 11 gegeben sein, wodurch eine verbesserte Gemischaufbereitung und Verbesserung der Abgasqualität, als auch eine Leistungssteigerung erzielt werden. Nachdem eine Grenztemperatur der Brennkraftmaschine 11 erreicht ist, die beispielsweise über einen Temperaturfühler 19 in der Abgasleitung 13 oder der Ladeluftleitung 14 erfaßbar ist, wird die Umschalteinrichtung 18 geschlossen. Dadurch wird der Ladeluftstrom durch den Ladeluftkühler 16 hindurchgeleitet und gekühlt, so daß keinerlei Nachteile, wie sie durch zu hohe Ladelufttemperaturen hervorgerufen werden, auftreten können, wie z.B. das Klopfen, Beschädigungen des Katalysators infolge zu hoher Abgastemperaturen oder ein verschlechterter Liefergrad aufgrund einer starken temperaturbedingten Absenkung der Ladeluftdichte.

Die Grenztemperatur der Brennkraftmaschine 11 kann einer Steuereinheit zugeführt werden, die ebenso weitere Kenngrößen von Sensoren, wie beispielsweise für Brennkraftmaschinendrehzahl, Brennkraftmaschinentemperatur, Kühlwassertemperatur, Ladedruck oder ggfs. Klopfsignale erfassen und verarbeiten kann. In Abhängigkeit dieser Kenngrößen kann durch die Steuereinheit (die mit einem Motormanagement integriert sein kann) eine beliebige Stellung zwischen geschlossenem und offenem Zustand der Umschalteinrichtung 18, vorzugsweise stufenlos, einstellbar sein, um eine optimale Leistung des Motors und eine Verbesserung der Abgasqualität zu erzielen.

In Fig. 2 ist eine schematische Ansicht des Ladeluftkühlers 16 dargestellt. Der Ladeluftkühler 16 weist ein Gehäuse 21 auf, in dem ein Kühlsystem 22 angeordnet ist, das vorzugsweise als U-Strom-Block ausgebildet ist. Im unteren Bereich 23 des Gehäuses 21 ist ein rechter Stutzen 24 einem Eintrittsbereich 26 zugeordnet und ein linker Stutzen 27 einem Austrittsbereich 28 zugeordnet. An dem rechten Stutzen 24 ist stromauf die mit dem Verdichter 15 verbundene Ladeluftleitung 14 vorgesehen. Der Eintritts- und Austrittsbereich 26, 28 ist durch die Umschalteinrichtung 18 getrennt.

Die Umschalteinrichtung 18 ist in einer einfachen Ausführungsform als schwenkbare Klappe 31 vorgesehen, die aus einem geschlossenen Zustand 32 (durchgezogene Linie) in einen offenen Zustand 33 (strichliniert), mit einer Stelleinrichtung 34, die von der Steuereinheit angesteuert wird, überführbar ist.

In einer offenen Stellung 33 der Umschalteinrichtung 18 strömt der Ladeluftstrom gemäß der Pfeile 36 aus dem rechten Stutzen 24 unmittelbar in den linken Stutzen 27 und wird der Brennkraftmaschine 11 zugeführt. In geschlossenen Zustand, nachdem eine Grenztemperatur der Brennkraftmaschine 11 überschritten ist, strömt der von dem Verdichter 15 kommende Ladeluftstrom über den rechten Stutzen 24 in das Kühlsystem 22 des Ladeluftkühlers 16 und gelangt nach dem Durchströmen gemäß den Pfeilen 35 in den Austrittsbereich 28 und mündet in den Stutzen 27 ein. In Abhängigkeit der Ausbildung des Ladeluftkühlers 16 kann die Durchströmrichtung gemäß den Pfeilen 35 auch andersartig erfolgen.

Die Stutzen 24, 27 sind in geringem Abstand zu der Umschalteinrichtung 18 angeordnet, um einen kurzen Strömungsweg bei einer offenen Stellung 33 der Umschalteinrichtung 18 zu ermöglichen. Die Stutzen 24, 27 sind im wesentlichen rechtwinklig zu einer Vorderseite des Ladeluftkühlers 14 angeordnet und im wesentlichen parallel zueinander beabstandet, so daß die Ladeluftleitungen 14 einfach daran anschließbar sind. Es kann ebenso vorgesehen sein, daß einbauspezifisch die Stutzen 24, 27 einander gegenüberliegend oder in der Längsachse des Gehäuse 21 angeordnet sind. Ferner können beide Stutzen 24, 27 im oberen Bereich des Gehäuses 21 vorgesehen sein oder in einer Winkelstellung zueinander angeordnet sein.

Der Eintrittsbereich 26 und Austrittsbereich 28 kann vorteilhafterweise Führungsleitbleche aufweisen, die insbesondere bei einer offenen Stellung 33 der Umschalteinrichtung 18 eine strömungsgünstige Umlenkung des Ladeluftstromes ermöglichen.

Die Umschalteinrichtung 18 kann über eine Stelleinrichtung 34 betätigbar sein. Diese Stelleinrichtung 34 kann auf die Umschalteinrichtung 18 abgestimmt sein. So kann beispielsweise bei einer Klappenanordnung 31 eine mechanische oder elektrische Betätigung erfolgen. Es kann ebenso vorgesehen sein, daß eine pneumatische, elektromagnetische oder hydraulische Stelleinrichtung 34 zur Betätigung der Umschalteinrichtung 18 vorgesehen ist. Die Ausbildung der Umschalteinrichtung 18 kann ebenso als Drosselklappe, Magnetventil, Zweiwegeventil oder einer sonstigen den Strömungsquerschnitt veränderbaren Anordnung vorgesehen sein. Die Stelleinrichtung 34 kann sowohl innerhalb des Gehäuses 21 des Ladeluftkühlers 16 als auch außerhalb angeordnet sein. Unabhängig der Art der verwendeten Umschalteinrichtung 18 ist erforderlich, daß diese Umschalteinrichtung 18 temperaturbeständig ausgebildet ist und hohen Drücken standhält und tropffest den Eintrittsbereich 26 zu dem Austrittsbereich 28 schließt.

Unabhängig von dem Ausführungsbeispiel der Fig. 2, in dem die Breite des Kühlnetzes (Kühlsystem 22) U-förmig durchströmt wird, ist es auch denkbar, daß die Tiefe des Kühlsystems 22 U-förmig durchströmbar ist.

Ferner ist es denkbar, in einem die gegensinnig durchströmten Teile des Kühlsystems 22 verbindenden Umlenk-Bereich 37 eine wie im Bereich 23 entsprechend angeordnete Umschalteinrichtung 18 vorzusehen, wobei die Umschalteinrichtung im Umlenk-Bereich 37 geschlossen ist, wenn die Umschalteinrichtung 18 im Bereich 23 geöffnet ist und umgekehrt.

## Patentansprüche

1. Brennkraftmaschine mit einem Abgasturbolader, dessen Verdichter in einer Ladeluftleitung der Brennkraftmaschine angeordnet ist, mit einem stromab des Verdichters angeordneten Ladeluftkühlers und mit einer Steuereinheit, die wenigstens einen die Temperatur der Brennkraftmaschine aufnehmbaren Temperaturfühler aufweist, dadurch gekennzeichnet, daß in dem Ladeluftkühler (16) eine Umschalteinrichtung (18) vorgesehen ist und während der Warmlaufphase der Brennkraftmaschine (11) bis zum Erreichen eines oder mehrerer vorgesehener Brennkraftmaschinenbetriebsparameter der nahezu gesamte Ladeluftstrom von der stromauf des Ladeluftkühlers (16) angeordneten Ladeluftleitung (14) unmittelbar einer stromab des Ladeluftkühlers (16) liegenden Ladeluftleitung (14) zugeführt wird.

2. Brennkraftmaschine nach Anspruch 1, dadurch gekennzeichnet, daß oberhalb eines oder mehrerer vorgegebener Brennkraftmaschinenbetriebsparameter die Umschalteinrichtung (18) in einer geschlossenen Stellung (32) anordenbar ist und der gesamte Ladeluftstrom durch den Ladeluftkühler (16) geführt wird.

3. Brennkraftmaschine nach einem der vorhergehenden Ansprüche, dadurch gekennzeichnet, daß zwischen einer stromauf und stromab über Stuten (24, 27) am Ladeluftkühler (16) angeschlossenen Ladeluftleitung (14) in einem Bereich (23) des Ladeluftkühlers (16) eine Umschalteinrichtung (18) vorgesehen ist, wobei bei geöffneter Stellung der Umschalteinrichtung (18) beide Stutzen (24, 27) über den Bereich (23) unmittelbar in Strömungsverbindung stehen,
und wobei bei geschlosssener Umschalteinrichtung (18) der Bereich (23) in einen Ein- und Austrittsbereich (26, 28) für das Kühlsystem (22) getrennt ist.

4. Brennkraftmaschine nach einem der vorhergehenden Ansprüche, dadurch gekennzeichnet, daß der Ladeluftkühler (16) jeweils einen dem Eintritts- und Austrittsbereich (26, 28) Zugeordneten Stutzen (24, 27) aufweist, an den jeweils stromauf und stromab des Ladeluftkühlers (16) eine Ladeluftleitung (14) anschließbar ist, wobei die Stutzen (24, 27) des Eintritts- und Austrittsbereichs (26, 28) im wesentlichen parallel zueinander und vorzugsweise mit geringem Abstand zu der Umschalteinrichtung (18) angeordnet sind.

5. Brennkraftmaschine nach einem der vorhergehenden Ansprüche, dadurch gekennzeichnet, daß die Umschalteinrichtung (18) im Strömungsquerschnitt, vorzugsweise stufenlos veränderbar ist und als eine schwenkbare Klappe (31) ausgebildet ist.

6. Brennkraftmaschine nach einem der vorhergehenden Ansprüche, dadurch gekennzeichnet, daß die Umschalteinrichtung (18) mit einer von einer Steuereinheit antreibbaren Stelleinrichtung (34) wirkverbunden und steuerbar ist.

7. Brennkraftmaschine nach einem der vorhergehenden Ansprüche, dadurch gekennzeichnet, daß der Ladeluftkühler (16) als ein U-Strom-Block-Kühlsystem ausgebildet ist.

8. Brennkraftmaschine nach einem der vorhergehenden Ansprüche, dadurch gekennzeichnet, daß die Umschalteinrichtung (18) einen die Tiefe des Kühlsystems (22) U-förmig durchströmenden Ladeluftstrom steuert.

9. Brennkraftmaschine nach einem der vorhergehenden Ansprüche, dadurch gekennzeichnet, daß in einem Umlenk-Bereich (37) des Ladeluftkühlers (16) eine zweite Umschalteinrichtung (18) vorsehbar ist.
